Europäisches Patentamt

European Patent Office

Office européen des brevets

(19)

(11) **EP 1 310 910 A1**

(12) # EUROPEAN PATENT APPLICATION

(43) Date of publication:
**14.05.2003 Bulletin 2003/20**

(51) Int Cl.⁷: **G06N 1/00**

(21) Application number: **01126515.4**

(22) Date of filing: **13.11.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Suter, Dieter, Prof. Dr.
44227 Dortmund (DE)**

(72) Inventor: **Suter, Dieter, Prof. Dr.
44227 Dortmund (DE)**

(74) Representative:
**2K Patentanwälte, Kewitz & Kollegen
Partnerschaft
Corneliusstrasse 18
60325 Frankfurt a.M. (DE)**

(54) **A method and system for quantum computation**

(57) The invention relates to a method and a system for quantum computation. According to the invention qubit information may be encoded in passive states weakly interacting with the environment or in active states strongly interacting with the environment and with other qubit atoms. At least one selective pulse of an oscillating electromagnetic field is used to transfer qubit information between the passive and the active state. According to the invention qubit-gating operations are applied to selected atoms in an active state.

According to a preferred embodiment the passive states are nuclear spin states and the active states are electron spin states and atoms are selected by a spatially varying magnetic field and be setting the frequency of the pulses in resonance. The strong dipole-dipole-interaction between electron magnetic moments of neighboring quantum computation atoms significantly reduces the qubit-gating time required. Atoms of non-vanishing nuclear and electron spin may be provided in the center of fullerene molecules. The spatially varying magnetic field may be generated by currents through wires provided on a substrate surface.

FIG. 1

EP 1 310 910 A1

**Description**

The present invention relates to a method, a system and a computer program product for quantum computation.

Quantum computation exploits quantum parallelism to carry out algorithms which, for certain problems, can be executed faster than any classical algorithm based on classical computation systems like conventional microprocessor-based computers. As an example, researchers at various laboratories have recently demonstrated powerful quantum search algorithms using small NMR quantum computers.

Current designs of quantum computers are based on quantum bits (hereinafter qubits) and quantum logic gates (hereinafter qubit gates) as basic components. Qubits are the quantum analogues of classical bits but are not limited to just two basic states but can exist instead in superposition states. Qubit gates act on qubits just as classical logic gates act on classical bits. However, qubit gates also work with superposition states thereby enabling multiple logic operations in parallel.

It has been shown that for carrying out universal quantum computations one-qubit gates gating a single qubit and two-qubit gates, like a CNOT-gate (controlled NOT) or an XOR-gate, gating a qubit by another qubit, e.g. associated to an adjacent nuclear spin, are required. According to the present invention a novel technique for providing one-qubit gates and two-qubit gates is to be provided.

Systems for quantum computation known from the prior art are substantially based on manipulating nuclear spins, which are known to have the longest coherence time of all potential qubits in physical systems as they are well isolated from their surroundings. It has been shown in the prior art that arbitrary or complex computations are possible in physical systems as long as a certain minimum number of basic logical operations controlled by qubit-gates can be executed before the qubit information stored in the nuclear spin system gets lost due to relaxation or other decoherence effects. Generally, the minimum number of basic logical operations required is given by a correction algorithm used for checking and correcting the logical state of qubits in the physical system. Accordingly, the time needed to carry out logic operations will limit the computational power achieved.

For quantum computation in physical systems it is necessary to address individual qubits, just like individual bits are addressed in a classical computing environment by read/write operations in memory components and the like. Nuclear spin quantum computing systems use magnetic fields spatially varying at least in one direction to shift the nuclear spin energy levels split by the Zeeman interaction. For practical systems the separation between the nuclear Larmor frequencies of neighboring quantum computing nuclear spins is of the order of a few kHz, thus requiring a duration of selective rf-pulses for manipulating individual qubits of the order of milliseconds (ms). This limits the computational power achieved and requires systems with relatively long nuclear spin relaxation times thus limiting the versatility of the system.

According to a first aspect of the present invention there is to be provided a method and a system for performing quantum computation with faster quantum gating operations.

According to a second aspect of the present invention there is to be provided a method and a system for performing quantum computation using a novel mechanism for addressing individual qubits and pairs of qubits.

According to a third aspect of the present invention there is to be provided a method and a system for performing quantum computation with atoms having a long decoherence time in a stable and reliable manner.

According to a fourth aspect of the present invention there is to be provided a computer program product for controlling a nuclear spin system in accordance with the teaching of the present invention to perform quantum computations.

These and further objects are accomplished by a method for quantum computation according to claim 1 and by a system for quantum computation according to claim 9. Further advantageous embodiments are the subject-matter of the dependent claims. The method for quantum computation according to the present invention can be performed readily by a computer program product with program code means for controlling the system elements, as will become apparent to a person skilled in the art from the following description.

According to the present invention there is provided a method for quantum computation in a system comprising a plurality of quantum computation atoms, an energy level changing means for subjecting said atoms to an interaction spatially varying in at least one direction and for changing the energy levels of said atoms, an oscillating electromagnetic field generating means for applying selective pulses of an oscillating electromagnetic field to said atoms and a circuitry for detecting a response signal from said atoms, the method comprising:

  providing said plurality of atoms at fixed predetermined locations relative to said energy level changing means for selecting quantum computation atoms in accordance with said interaction;
  controlling said oscillating electromagnetic field generating means as to apply a sequence of selective pulses to selected atoms representing a qubit gate; and
  detecting a response signal from said atoms in response to the qubit gate applied;

wherein the step of controlling said oscillating electromagnetic field generating means comprises:

generating at least one selective pulse for transferring logical qubit information of a selected atom between a passive state, where the qubit information is encoded in a state weakly interacting with the environment, and an active state, where the logical qubit information is encoded in a state strongly interacting with the environment, wherein said qubit gate is applied to a selected atom in an active state.

Thus, the present invention makes use of an additional degree of freedom of the quantum computation atoms for carrying out quantum computation. According to the present invention the quantum computation atoms may be in a first physical state (hereinafter passive state), where the qubit information is encoded or stored in a physical state weakly interacting with the environment, or in a second physical state (hereinafter active state) of the system, where the qubit information is encoded or stored in a state strongly interacting with the environment. According to the present invention sequences of selective pulses, i.e. pulses of an oscillating electromagnetic field in or nearly in resonance with transitions between physical states of the quantum computation atom, may be used to manipulate the atoms as to switch the atoms between the first or passive state and the second or active state back and forth as required.

In the first or passive physical state of the quantum computation atom the logical qubit information may be stored over a long period of time, as given by a relaxation time constant of the passive state. According to the present invention, when the logical qubit information of two neighboring quantum computation atoms is encoded in the passive state the interaction between the two passive states may be neglected due to the weak coupling of the passive states. On the other hand, when the qubit information of two neighboring quantum computation atoms is encoded in the active state, a one- and two-qubit gating operations may be performed faster due to the strong coupling of the active states.

In the sense of this application the 'environment' also includes atoms of neighboring qubits. Thus, an advantageously faster two-qubit gating can be achieved according to the present invention, by applying the two-qubit gate when neighboring quantum computation atoms are in the active state.

As an example, in the prior art the qubit information is always encoded in nuclear spin levels and two-qubit gating operations rely on the relatively weak interaction between nuclear magnetic moments of neighboring quantum computation atoms, which limits the gating time constant. In contrast, according to the present invention the logical qubit information may be transferred first into an active state like an electron spin state, where the dipole-dipole-coupling of electron magnetic moments of two neighboring atoms is significantly stronger thereby enabling significantly faster one- and two-qubit gating operations.

According to a preferred embodiment, both the passive and the active states are pairs (e.g. for spin=1/2 systems) or sets of eigenstates of the Hamiltonian of the quantum computation atoms. For transferring the logical qubit information between the active and passive state the active and passive states are coupled by at least one selective pulse. While both states are coupled, the logical qubit information in the passive (active) state modifies the active (passive) state thus enabling the transfer of logical qubit information between two different physical states. As pulses of an oscillating electromagnetic field may be generated readily with appropriate frequencies and pulse duration, the quantum computation atoms may be manipulated readily according to the present invention.

Of course, the passive states and active states may also be eigenstates of different systems. E.g. the passive states may be electron spin eigenstates of a quantum computation atom weakly interacting with the environment whereas the active states may be vibrational or rotational eigenstates of a molecule comprising the quantum computation atom, which strongly interact with the environment as compared to the passive states. For the transfer of logical qubit information between the passive and active state some kind of interaction is required that mixes the passive and active states.

According to a preferred embodiment of the present invention the quantum computation atoms have a non-vanishing electron and nuclear spin and the passive state is a nuclear spin state whereas the active state is an electron spin state. As is known from the prior art, the nuclear spin states are suitable for quantum computation as the nuclear spin interacts only weakly with the environment. As the the Bohr or electron magneton is about three order of magnitude larger than the nuclear magneton, the dipole-dipole-interaction between electron spins of two neighboring quantum computation atoms may be increased by approx. six order of magnitude as compared to the convention dipole-dipole-interaction between nuclear spins of neighboring quantum computation atoms. According to the preferred embodiment, a hyperfine interaction between the electron and nuclear spin enables a transfer of qubit information between an active and a passive state.

For the following description it will be assumed that the passive states are nuclear spin states and the active states are electron spin states. However, as explained above in detail, the present invention is by no means limited to this specific combination of active and passive states.

As the Bohr or electron magneton $\mu_e$ is about three orders of magnitude larger than the nuclear magneton $\mu_N$, the frequency separation of neighboring electron spin levels is increased by approximately three orders of magnitude thus enabling significantly faster qubit-gate operations. In actual physical systems envisaged by the present invention the frequency separation may be e.g. larger than about 10 MHz thus enabling selective qubit-gate operations to be carried out in less than approximately 1 microsecond. An advantage of the faster gating operation according to the present invention is that a significantly larger number of gate operations may be carried out before performing a correction algorithm for checking and correcting qubits. A further advantage is the increased versatility of the method and system of the present invention as also physical systems of relatively short nuclear spin relaxation times may be used for performing quantum computation.

According to a preferred embodiment of the present invention, the electron spin system is manipulated by selective pulses, which act only on one of the two or more transitions between electron spin energy levels split by the hyperfine interaction, depending on the electron and nuclear spin. Thus for providing a sequence of selective pulses for manipulating the electron spin system the frequency of the oscillating electromagnetic field generating means is controlled in accordance with the respective electron transition selected.

Preferably, the sequence of selective pulses coupling to electron spin transitions are in the microwave region, e.g. at frequencies of some GHz. In contrast, the selective pulses coupling to the nuclear spin transitions are in the rf-region, e.g. of the order of some MHz. Hence, according to the present invention pulse sequencing techniques well-known from NMR (nuclear magnetic resonance) and ESR (electron spin resonance) experiments can be used so that the quantum computation system according to the present invention may be based substantially on existing NMR and ESR technologies.

The invention is, however, not limited to the above frequency regions and selective pulse sequences as introduced below may be applied in or near resonance to electron or nuclear spin transitions in other frequency regions as well, depending on the system actually used. Thus, hereinafter the term 'oscillating electromagnetic field' is to be interpreted in the broadest sense and may include also the optical frequency range including the near or far infrared wavelength region for exciting vibrational or rotational modes of molecules. Accordingly, it is to be understood that the frequency regions introduced below are but preferred frequency regions. According to the preferred embodiment of the present invention using nuclear and electron spin states as passive and active spin states the oscillating electromagnetic field generating means may be a conventional source capable of generating both rf-pulses and micro-wave-pulses at a suitable frequency and duration.

Accordingly, the preferred embodiment of the present invention is based on a non-vanishing electron and nuclear spin of the atoms associated to individual qubits. In contrast, prior art systems solely relied on a non-vanishing nuclear spin for preparing and manipulating qubits but did not rely on a non-vanishing electron spin.

For addressing individual qubits, it is necessary to provide some energy level changing means that subjects the quantum computation atoms to an interaction that varies spatially at least in one direction and shifts the energies of the active and/or passive states depending on the location of the quantum computation atom with respect to the energy level changing means. Depending on the interaction used the energy level changing means may apply e.g. a magnetic or electric field spatially varying in at least one direction. In other applications envisaged by the present invention, where the quantum computation atoms are trapped by light forces, the energy levels may also be shifted by applying a laser field by means of the well-known AC stark shift effect. Of course, an AC stark shift may also shift the energy levels in any other quantum computation system as set forth herein.

According to the preferred embodiment using nuclear and electron spin states as passive and active states, the energy level changing means generates an external magnetic field shifting both the electron and the nuclear spin states due to the Zeeman interaction thus ensuring that atoms at different locations have a unique Zeeman splitting of the electron and nuclear spin levels. The gradient of the spatially varying magnetic field is set in accordance with the frequency resolution achievable with the oscillating electromagnetic field generating means used and with the distance between neighboring quantum computation atoms so that the energy level differences between adjacent atoms is larger than the frequency resolution of the oscillating electromagnetic field generating means used in the system.

According to the preferred embodiment of the present invention the magnetic field may be varied spatially in more than one direction, e.g. in three direction that may be mutually orthogonal with each other.

For reliably addressing individual qubits the quantum computation atoms are positioned at fixed predetermined locations relative to the magnetic field generating means thereby ensuring a predetermined magnetic field at the location of a respective quantum computation atom. In principle, the term 'fixed location' in the sense of the present invention means that the positional variation of the quantum computation atom is significantly smaller than a displacement of an atom in the external magnetic field that would correspond to the frequency resolution of the oscillating electromagnetic field generating means used.

According to a preferred embodiment of the present invention the quantum computation atoms are provided directly, or mediated by some attaching means like fullerene molecules surrounding the quantum computation atoms, at fixed predetermined locations of a solid state system. According to a preferred embodiment, the quantum computation atoms are disposed on a solid state surface in fixed relationship to the crystal lattice sites of the solid state systems. In principle, the atoms may also be implanted into a solid state bulk.

However, the present invention is not limited to solid state systems for providing the quantum computation atoms at the fixed predetermined locations. Accordingly, it is in principle envisaged that the quantum computation atoms may also be trapped by known means, e.g. ion trapping, light trapping, where the quantum computation atoms are not fixed statically to a support but move slowly, i.e. at low-K temperatures, in an environment as long as the frequency shift induced by the mean displacement of the atoms in the external magnetic field is small as compared to the frequency resolution of the oscillating electromagnetic field generating means used. A second prerequisite being, of course, that the distance between two neighboring quantum computation atoms in such an arrangement is sufficiently small for enabling two-qubit gate operations between neighboring quantum computation atoms as mediated by an interaction coupling the neighboring quantum computation atoms.

As is well known from NMR, pulses of an oscillating electromagnetic field in resonance with a nuclear spin transition will rotate the nuclear spins about the direction of the oscillating electromagnetic field, which is typically arranged to lie at right angles to the fixed external magnetic field. By varying the duration of the rf-pulses the nuclear spins may be flipped at will. E.g., if the oscillating rf-pulse has a duration long enough to rotate the nuclear spins by 90 degrees ($\pi/2$-pulse), this would leave the nuclear spins with an equal probability of being aligned parallel or antiparallel. The present invention applies this principle both to electron and nuclear spin transitions.

Thus, by means of applying selective pulses to a first quantum computation atom, phase shifts and population changes of the electron spin of a first atom may be induced that will modify the dipole-dipole interaction with an electron spin of a neighboring quantum computation atom and will thus have an effect on the electron spin of the neighboring quantum computation atom. As the frequencies of the selective pulses are set in accordance with the energy level differences in the spatially varying external magnetic field, it is thus possible to selectively couple electron spins of two selected quantum computation atoms with each other. With qubit information encoded in the electron spin states (which is but one example for the active state in the sense of the present invention) a two-qubit gating operation may be performed readily.

According to the preferred embodiment of the present invention a first sequence of selective pulses is used for shifting qubit information between nuclear spin levels and electron spin states. According to a preferred embodiment a first sequence of selective pulses is used, which in principle corresponds to SWAP-sequences as known from the prior art and comprises three $\pi$-pulses. In the first sequence the frequency of at least one pulse is selected in accordance with a nuclear spin energy level difference of a selected atom and the frequency of at least a second pulse is selected in accordance with an electron spin energy level difference of a selected atom, wherein the quantum computing atom is selected by the magnitude of the external magnetic field at the location of the respective atom and wherein the frequencies of the at least one pulse and of the at least one second pulse are set in resonance or at least nearly in resonance with the nuclear spin transition and electron spin transition, respectively, as given by the respective spin Hamiltonian including electron and nuclear Zeeman interations.

According to the preferred embodiment of the present invention both the electron spin and the nuclear spin system may be used for quantum computation. In the system according to the present invention some kind of convention is used for defining active and passive qubit states. According to the preferred embodiment a passive qubit state corresponds to a state where the qubit information is stored or encoded in the nuclear spin of a quantum computation atom and an active state corresponds to a state where the qubit information is stored or encoded in an electron spin of the atom associated to the qubit. The present invention is, however, by no means limited to such electron spin systems and it is also envisaged according to the present invention to use the electron spin system of some mediating atom or molecule associated to the qubit instead for storing or encoding the qubit information. E.g., the nuclear spin of the qubit may be the nuclear spin of a first atom of a molecule, in which case the electron spin of the mediating atom could be the electron spin of another atom of the molecule neighboring or in close vicinity to the atom associated to the nuclear spin of the qubit.

With the above convention chosen SWAP-sequences of selective pulses may be used to transfer logical qubit information of selected atoms between the passive state and the active state as required by the quantum computation to be carried out. For this purpose, the quantum computation atoms, i.e. the atoms associated to individual qubits, are addressed and manipulated by choosing an appropriate strength of the external magnetic field and setting the frequencies and duration of the selective pulses used in accordance with the electron and nuclear spin transitions of the selected atom and the strength of the oscillating electromagnetic field. When being in the active state, according to the present invention the selected atoms may be manipulated further by applying at least one selective pulse of a frequency in accordance with the electron spin energy level difference at the location of the selected atom thus opening the possibility to further modify the qubit information in the active state, e.g. imparting phase shifts or changing superposition states in accordance with the one or more selective pulses applied in the active state. Afterwards, the quantum computation atoms may be switched back to the passive state by means of another sequence of selective pulses.

Thus, according to the present invention one-qubit gate operations may be performed by coupling selective pulses to the nuclear spin system or to the electron spin system. This represents an additional degree of freedom for quantum computation and significantly enhances the flexibility and versatility of the system according to the present invention. As shown above, by coupling selective pulses to the electron spin system the duration of selective one-qubit gate operations may be reduced significantly according to the present invention.

In the prior art, two-qubit gating operations are mediated by dipole-dipole-interaction between nuclear spins of neighboring atoms. In contrast, according to the present invention a two-qubit gating operation involves applying a second sequence of selective pulses for manipulating the electron spins of the neighboring atoms instead, said neighboring atoms being associated to qubits that are to perform the two-qubit gating operation. Thus, as the frequency separation of the neighboring electron spins is orders of magnitude larger than that of nuclear spins the duration of selective one- and two-qubit gating operations may be reduced significantly according the present invention.

According to the preferred embodiment of the present invention, the second sequence of selective pulses used for two-qubit gating operations involves generating at least one pulse of a frequency selected in accordance with an electron spin energy level difference of a first selected atom of the neighboring atoms and generating at least another pulse of a frequency selected in accordance with an electron spin energy level difference of another selected atom of the neighboring atoms. Thus, the magnitude of the external magnetic field and the frequency of the selective pulses may be used for addressing individual qubits and performing the two-qubit gating operations in accordance with the computation to be carried out.

According to the preferred embodiment the qubit information is normally stored or encoded in the nuclear spin states, i.e. in a passive state. Accordingly, the above SWAP or first sequences of selective pulses are used for manipulating, by subsequently applying two of said first sequences of selective pulses, the electron and nuclear spins of two neighboring atoms to thereby transfer logical qubit-information of these neighboring atoms from a passive state to an active state and prepare the selected atoms for a subsequent gating operation performed in the active state. Then, the above second sequence of selective pulses is applied for coupling the active states of said neighboring atoms, i.e. electron spin states with the logical qubit-information encoded therein, for performing the two-qubit gating operation. In order to transfer the logical qubit-information of the neighboring atoms back to the passive state, the above SWAP or first sequences of selective pulses are applied again for manipulating, by subsequently applying said two first sequences of selective pulses, the electron and nuclear spins of said neighboring atoms.

Of course, if one or two of the above neighboring atoms is required for a subsequent gating operation, these atoms may remain in the active state instead of being switched back first to the passive state and then switched back again to the active state for performing another gating operation.

Thus, according to the present invention the qubit information may be stored in the nuclear spins while no gating operation is applied and the gating operations may be performed on the strongly interacting electron spins. This allows one to optimize the number of gate operations before decoherence becomes relevant.

While the above summary has been given for applying the two-qubit gating operations to neighboring atoms, the present invention is not limited to this application. Instead the two-qubit gating operations may also be applied to two selected atoms lying 'close' together as long as the strength of the interaction is sufficient for performing the gating operation. Hence, it is also envisaged that the present invention be carried out for two-qubit gating operation between next-nearest neighbors or over even longer interaction distances.

Thus, for performing complex quantum computations the system is initialized in the beginning. According to the preferred embodiment it is waited until the nuclear spins have relaxed to the nuclear spin ground state, which is then a well-defined initial state of the quantum computation system. As an alternative, in the preferred embodiment a well-defined initial state is obtained after the electron spins have relaxed to the electron spin ground state. Due to the significantly stronger interaction of the electron spin with the environment the time for initialization may be reduced substantially. After such an initialization the system is in the active state.

The qubits may then be prepared and manipulated by using the above one-qubit and two-qubit gating operations. Of course, the present invention is not limited to such an initialization and according to an alternative also a sequence of selective rf-pulses or of one-qubit gating operations can be used instead to define a well-defined initial state of the quantum computation system. A possible extension uses an "initialization-qubit", which undergoes rapid relaxation into the ground state. This ground state may then be SWAPed into the active or passive qubit in a manner analogous to that described above.

By subsequently applying the above one-qubit and two-qubit gating operations complex quantum computations are carried out as requested by an algorithm. If, after performing a sequence of gating operations, a maximum time as given by the nuclear spin relaxation time or the relevant decoherence times is finally reached a quantum correction algorithm may be used for checking and correcting erroneous qubit states. Finally, the qubit information is read out by a circuit capable of detecting a response signal from the quantum computation atoms. For performing the quantum computations the system may be clocked regularly (thus requiring applying the above sequences at regular intervals) or irregularly as required by the algorithm to be carried out.

The present invention is not primarily focused on reading out the qubit information. However, from the prior art techniques are known for detecting the state of single spins or of a small number of spins that may be used for the purpose of the present invention as will become apparent to the person skilled in the art when studying the following description. While examples will be given below, it is also envisaged according to the present invention that the above sequences of selective pulses may also be applied for selectively reading out qubit information. E.g. the above SWAP-sequence may be used to switch the atom associated to an individual qubit from the passive state, where the qubit information is stored in the nuclear spin, to an active state, where the qubit information is stored in the electron spin. Further conversion of the quantum information into charge degrees of freedom could allow one to use a conventional single-electron detection device for reading out the selected qubit. Such a device may, of course, also be used in the opposite direction as to impart information to selected qubits of the quantum computation system.

Thus, according to the present invention also the process of reading out qubit information can be accelerated significantly.

According to the preferred embodiment of the present invention the atoms of non-vanishing electron and nuclear spin are provided in the centre of fullerene molecules (e.g. C60), which may be regarded as nanometer size traps for the atoms. It is known that some types of atoms inside such cages are virtually free atoms exhibiting relatively long relaxation times thus increasing the total number of quantum gating operations that can be performed before a quantum correction algorithm needs to be carried out.

Another advantage of using such fullerene molecules is that well-established techniques are known from the prior art for precisely positioning such molecules. Thus a precise positioning of the quantum computation atoms may be achieved easily. Among such techniques a preferred technique uses a probe needle or some other positioning means of a scanning tunneling microscope for disposing the molecules together with the quantum computation atoms. The invention is, however, not limited to this application and other techniques for the precise positioning of atoms or molecules may be used as well, e.g. manipulating atoms or molecules with strong laser fields (so-called optical tweezers). Further, it is also envisaged according to the present invention to provide the atoms or molecules by depositing a single layer, possibly thinned out, on the surface of a suitable substrate like a freshly cleaved or a specially prepared crystalline surface making use of self-organizing capabilities of the atoms or molecules during the deposition process.

According to a preferred embodiment the quantum computation atoms are provided at a regular predetermined pattern. With a knowledge of the distances between the quantum computation atoms given and the information on the shape and strength of the magnetic field the frequencies of the selective rf or microwave pulses may be selected easily. Preferably the magnetic field is established such as to vary approximately linearly (at least to first order approximation) in a given spatial direction. Thus, together with the approximately linear dependence of the position of the quantum computation atoms in the regular pattern the frequency may be varied approx. linearly for generating the selective pulses required.

However, the quantum computation atoms may also be provided at a non-regular pattern, e.g. if is desired to pre-pattern the quantum computation system in accordance with a particular algorithm to be carried out. Further, the external magnetic field may also vary non-linearly with a given direction. Also in that case, with information given on the pattern of the quantum computation atoms, the appropriate frequencies may be set easily for carrying out the required selective pulse sequences.

According to a preferred embodiment the quantum computation atoms or the fullerene molecules with the quantum computation atoms disposed therein are deposited on a solid state surface. Thus adhesive interactions between the atoms or fullerene molecules and atoms of the solid state surface automatically position the atoms or molecules at predetermined locations determined by the crystal lattice. The solid state surface may, of course, be provided with a suitable surface structure like steps, islands, recesses or the like thereby modifying the arrangement of the quantum computation atoms. A preferred substrate material according to the present invention is a semiconductor substrate, as it may be provided easily at suitable quality and price with conventional techniques like Czochralski-growing of single crystals, LPCVD or molecular beam epitaxy methods. Preferably, the semiconductor substrate is made of a material selected from a group consisting of the following materials: Silicon, Germanium, or a heterogeneous compound III-V or II-VI semiconductor.

The external magnetic field used for addressing the individual qubits may be static or may timely vary. When a static magnetic field is used the frequencies of the selective pulses are shifted in accordance with the Zeeman energies for addressing individual qubits. On the other hand, when a timely varying magnetic field is used the microwave frequency may be fixed for addressing individual qubits. Combinations are also possible.

In order to ensure a high package density and thereby strong interactions between neighboring atoms a strong gradient is imparted to the magnetic field. According to a preferred embodiment, for this purpose a pair of electrically conductive paths extending substantially in parallel to each other is provided for each direction where the external magnetic field is to vary spatially. The distance between the two conductive paths is chosen in accordance with the magnetic field gradient required to address individual qubits and with the frequency resolution of the oscillating electromagnetic field generating means used. The conductive paths preferably extend substantially linearly, but may include some curved sections, depending on the system requirements.

Preferably the electrically conductive paths are provided as a pair of parallel wires on a substrate. If a semiconductor substrate is used the wires may be provided as paths or tracks of metal extending in one or two directions on the surface of the substrate, e.g. in two mutually orthogonal directions. Of course, also three-dimensional patterning and layering techniques known from semiconductor microelectronics may be used for providing the system according to the present invention. Thus, according to the present invention conventional semiconductor process steps and masking and patterning techniques well-known from semiconductor microelectronics may be used for providing an integrated quantum computation system.

As the current in the conductive paths may be varied quickly, the time required for addressing individual qubits may be reduced substantially. Further, as the magnitude of the current in the conductive paths may be varied over a broad range a large number of qubits may be addressed. In contrast, in prior art system using a static magnetic field for addressing individual qubits both the time required for addressing and the total number of qubits that can be addressed is limited due to inherent limitations of varying the frequency of microwave and rf-pulses as well as the properties of the permanent micromagnets used.

According to the fourth aspect of the present invention there is provided a computer program product comprising program code means for performing the quantum computation method, if said program is run on a processing means including a quantum computing system for controlling at least said oscillating electromagnetic field generating means in accordance with quantum computations to be performed. The program code means may be stored on a magnetic or optical carrier but may be provided as well by transmission in a network environment. The processing means preferably includes a conventional microprocessor so that the present invention enables quantum computations be carried in a conventional computing environment modified in accordance with the teaching of the present invention.

In the following some preferred exemplary embodiments will be discussed with reference to the figures, wherein:

Fig. 1    is a schematic diagram illustrating a quantum computation system according to the present invention;

Fig. 2    is graph illustrating the spatial dependence of the magnetic field and of the magnetic field gradient generated by the magnetic field generating means of the embodiment shown in Fig. 1; and

Fig. 3    is a schematic diagram illustrating the energy levels involved in quantum gating operations according to the present invention together with exemplary frequency spectra.

When studying the following description together with the drawings, additional aspects, features and advantages of the present invention will become apparent to the person skilled in the art. Throughout the drawings, identical reference numerals designate identical elements/functions or elements/functions that are equivalent as regards the technical effects achieved.

The following description comprises a first part (I) schematically introducing an exemplary embodiment of a quantum computation system according to the present invention and a second part (II) explaining the basic theoretical principles of the quantum computation method according to the present invention.

**I. Description of System**

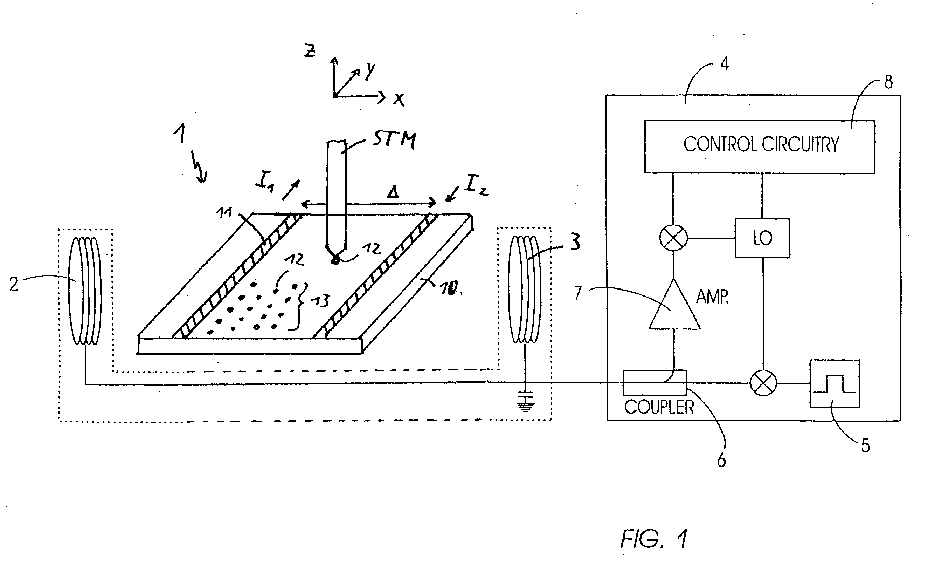

Fig. 1 shows a schematic diagram of a quantum computation system 1 according to the present invention. The quantum computation system comprises a solid state substrate 10 on the surface of which there are provided a plurality of quantum computation atoms schematically represented by reference numeral 12.

The substrate may be a semiconductor substrate, e.g. of silicon, Germanium, or of a compound semiconductor material like III-V or II-VI semiconductors. The substrate may also be a crystalline substrate exhibiting regular crystal lattice sites on the surface thereof, e.g. a freshly cleaved Quartz crystal.

For reducing disturbing effects from the environment, the quantum computation system 1 is arranged in a suitable vacuum equipment (not shown), preferably under UHV conditions. In order to reduce any thermal noise, the substrate 10 is cooled to low temperatures, preferably to liquid Helium temperatures or even lower thereby extending relaxation times and preventing any movement of the quantum computation atoms on the substrate surface 10 due to thermal hopping between lattice sites.

The atoms 12 are preferably provided at a regular pattern on the substrate 10. For this purpose self-organizing capabilities imparted by an interaction between crystal lattice sites and the quantum computation atoms might be sufficient. As shown in Fig. 1, however, a probe needle of a conventional scanning tunneling microscope (STM) is used for accurately positioning the atoms on the crystal lattice scale. For this purpose, the atoms or molecules (as explained below) are shifted by the probe to suitable locations on the surface of the substrate 10. As an alternative, the atoms or molecules may be picked up first and then dropped at suitable locations on the substrate 10 by applying a voltage pulse to the probe. This process is repeated until the desired pattern 13 of quantum computation atoms 12 is accomplished on the surface of the substrate 10. Afterwards, the STM probe may be removed. However, as explained below the STM probe may also be used as a single electron detecting means for detecting a response signal from individual quantum computation atoms.

The quantum computation atoms used according to the present have both a non-vanishing electron spin and a non-vanishing nuclear spin, preferred but non-delimiting examples being represented by $^{31}$P, $^{15}$N and $^{14}$N. Instead of directly placing the atoms onto the substrate surface the quantum computation atoms may be brought into cages of fullerene molecules, like C60. Suitable other molecules will be apparent to the person skilled in the art when studying the specification. Most recently (Science, Vol. 294, p. 828) a method has been implemented wherein fullerene molecules are provided of substantially planar constituents that are selectively closed to the fullerene cage by applying laser light. According the present invention the quantum computation atoms may be applied to these constituents first before applying the laser light thereby ensuring a controlled generation of fullerene molecules with quantum computation atoms disposed therein. As an alternative the quantum computation atoms may also represent constituent atoms of a molecule, e.g. of a radical molecule.

As indicated at 11 a magnetic field generating means is used to apply a spatially varying external magnetic field and to split the electron and nuclear spin states due to Zeeman interaction. As shown in Fig. 1 the magnetic field may vary in one direction. However, it is envisaged that according the present invention the magnetic field may timely vary in a second orthogonal direction or in three directions, e.g. in mutually orthogonal directions.

For generating a timely gated external magnetic field, e.g. in synchronism with the clocking of the quantum computation system 1, two wires or conductive paths 11 are patterned on the substrate surface, e.g. by depositing a metal layer on exposed areas of the masked substrate 10 by means of conventional depositing techniques known from semiconductor manufacturing. As shown in Fig. 1, the wires 11 extend substantially linearly and in parallel with each other at a distance $\Delta$. Of course, the wires may include curved portions. Suitable designs will become apparent to the person skilled in the art when having access to this specification. When applying an external magnetic field, two currents $I_1$ of equal or possibly different magnitude are applied to the wires 11.

By varying the currents in the wires the Zeeman levels may be shifted in resonance with the rf- and microwave pulses used so that the rf- and microwave frequencies may be substantially static or have to be shifted only over a narrow frequency range thus allowing the use of low cost microwave and rf equipment.

As will become apparent to the person skilled in the art the one-dimensional design according to Fig. 1 may readily be extended into two or three dimensions and may be manufactured by using conventional techniques of microelectronics.

Of course, the magnetic field gradient may also be generated by static magnets arranged in appropriate geometry on the substrate 10. In that case the frequency of the rf-pulses has to be shifted in accordance with the Zeeman interaction at the location of a selected atom. Quantum computation systems using static magnetic field gradients are disclosed e.g. by Goldman et al. [16] the content of which is hereby explicitly incorporated in this application by cross-reference for the purpose of disclosure. A combination of static field gradients from permanent magnets with time-variable field gradients from current-carrying wires is also possible.

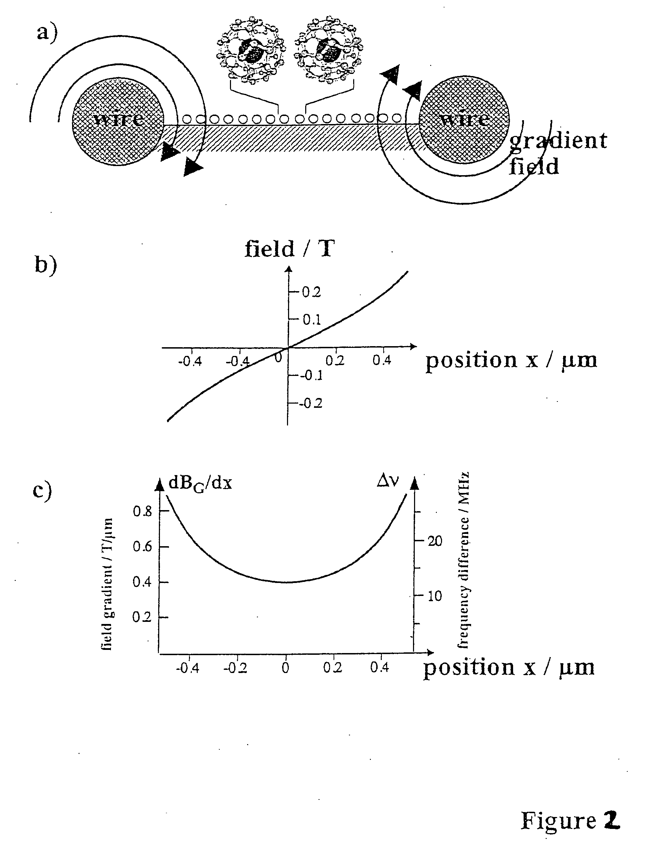

Fig. 2 is a graph illustrating the spatially varying magnetic field generated by a pair of spaced wires. In the upper part, Fig. 2a is an artist's view of a quantum computation system according to the present invention with the conductive paths implemented as to parallel micro-patterned wires on a substrate and the fullerene molecules surrounding the quantum computation atoms (schematically shown above the substrate) positioned in a regular pattern on the substrate surface, as indicated by the circles. As shown in Fig. 2a the two currents flowing into same directions induce magnetic fields that superimpose to thereby generate a strong magnetic field gradient in the area between the two wires.

As shown in Fig. 2b, near the center between the two wires the magnetic field varies approximately linearly with the distance between the two wires thereby facilitating the addressing of individual qubits. Fig. 2c shows a calculated magnetic field gradient near the center between the two wires; the frequency scale on the right-hand side is expressed in typical frequency dimensions for typical quantum computation atoms as mentioned above.

In order to provide a larger number of quantum computation atoms the structure shown in Fig. 1 may be repeated in one, two or three dimensions to thereby create ensembles of virtually identical quantum computation atoms addressable in the same manner by means of the external magnetic field and applying identical sequences of selective pulses to all ensembles simultaneously. As an example, it is envisaged according to the present invention to provide a first pattern 13 of quantum computation atoms 12 at a first y-location along the wires 11 and to provide identical patterns (not shown) at different y-locations along the wires 11 each pattern representing an identical subsystem and all patterns together representing an ensemble of identical subsystems and of identical quantum computation atoms. In order to avoid interactions between any such patterns or subsystems a spacing may be provided between the individual patterns or subsystems in one, two or three directions.

At the right-hand part of Fig. 1 there is shown a conventional circuitry 4 for generating a pulsed oscillating electromagnetic field. The circuitry 4 includes a control circuitry 8, a signal generator LO for generating an alternating signal of appropriate frequency and an amplifier 7 for amplifying signals sent to the coils 2, 3 and/or received from the coils 2, 3, a signal synthesizer 5 for generating gating rectangular or ramped pulses for gating the alternating signal. The gated alternating signal is, by means of a coupler 6, coupled into the arrangement of coils 2, 3 used for applying the sequences of selective pulses to the quantum computation system 1. Generally, the circuitry is known from the prior art and is not the primary concern of this specification so that details are omitted for the sake of clarity.

By means of the coils 2, 3 sequences of selective pulses may be applied to the electron spins and to the nuclear spins of the quantum computation atoms 12. For this purpose, also separate coils or equivalent means may be provided for separately applying pulses in the microwave and in the rf frequency range. Also the remainder of the circuitry 4 is configured for sending and receiving signals in the microwave and in the rf frequency range.

In principle, the coils 2, 3 may also be used for detecting a response signal from the quantum computation atoms in accordance with the quantum gating operations performed. This requires, of course, an appropriate sensitivity of the circuitry and a large enough ensemble of quantum computation atoms. As an alternative single atom probing systems may be used for deriving a response signal, e.g. the STM probe shown in Fig. 1. As will be explained below in more detail, also single-electron readout devices, like the STM probe shown in Fig. 1, may be used for this purpose as according to the present invention qubit information may be shifted from the nuclear spins to electron spins where they can be read out in a conventional manner.

Of course, also the coils 2, 3 and/or the detection circuitry may be implemented by patterning and structuring the substrate 10 with process steps well-known from semiconductor manufacturing, as the person skilled in the art will recognize. As an alternative, the coils 2 and/or 3 for applying the selective pulses to the quantum computation atoms may be replaced by conventional microwave-horns or microwave-striplines.

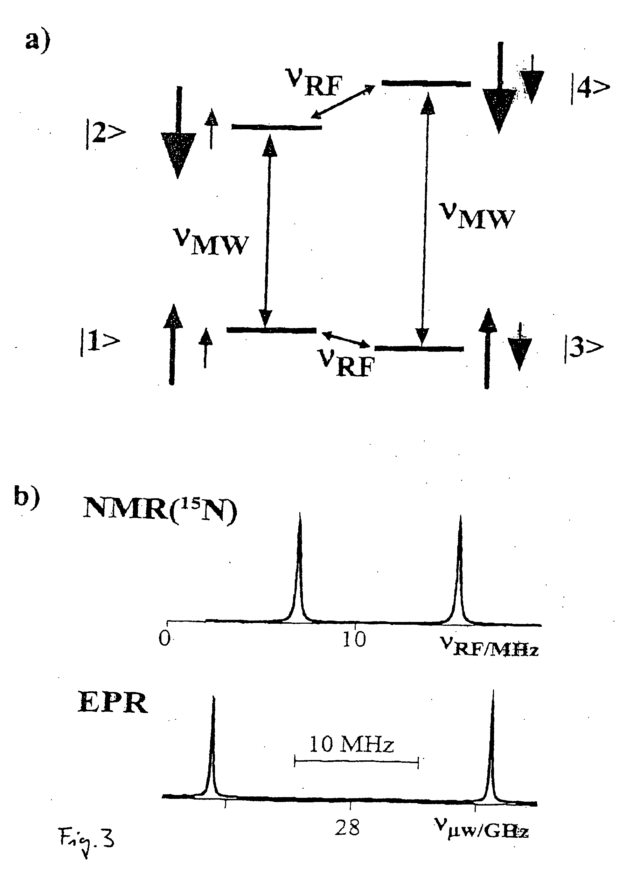

Fig. 3a is a schematic diagram illustrating the nuclear and electron spin energy levels involved in quantum gating operations according to the present invention. The details of the nuclear and electron spin Hamiltonian will be discussed below, where it will be shown that for the above model atom the nuclear and electron spin levels may assumed as represented in Fig. 3.

For the sake of clarity, we assume here a quantum computation atom with a nuclear spin of $I = \frac{1}{2}$ and an electron spin of $S = \frac{1}{2}$. The invention is, however, not limited to such exemplary systems and it will become apparent to the person skilled in the art that other nuclear and electron spins may be used as well as long as the electron and nuclear spin are non-vanishing.

As shown in Fig. 3a, the electron spin levels are split by the electron Zeeman interaction into an upper level and a lower level. The energy difference between the two electron Zeeman levels is of the order of GHz in practical systems envisaged by the present invention, so that the electron spins may be flipped by irradiating the transition between the lower and the upper Zeeman level with a microwave pulse of a frequency in resonance or nearly in resonance with the energy level difference between the two electron Zeeman levels. The electron spin orientation in the respective Zeeman split electron level is indicated by the bolder (and longer) arrow.

As shown in Fig. 3a, for the system with nuclear spin $I = \frac{1}{2}$ assumed here, the lower electron Zeeman level is split by the external magnetic field into two nuclear spin Zeeman levels |1> and |3> whereas the upper electron Zeeman level is split by the external magnetic field into two nuclear spin Zeeman levels |2> and |4>. The short arrows at the right-hand side of each level indicate the nuclear spin population and orientation in the respective nuclear spin state. The indices of the nuclear spin states correspond to the indices used below for describing the SWAP-sequences.

Thus, by applying sequences of selective pulses in resonance or nearly on resonance with the nuclear and electron spin transitions, the nuclear and electron spins may be manipulated at will, as is well-known from NMR and ESR techniques.

As will be shown below in detail, according to the present invention a one-qubit gate is implemented by applying a SWAP sequence (see equation (5) below) to an atom selected by means of the magnetic field strength to switch the selected atom from the passive state, where qubit-information is stored or encoded in the nuclear spin, to the active state, where qubit-information is stored or encoded in the electron spin, by applying a sequence of selective pulses coupling to the electron spin and to the nuclear spins and by applying a second SWAP sequence to switch the selected atom back to the passive state.

As will be shown below in detail, according to the present invention a two-qubit gate is implemented by applying a SWAP sequence to two neighboring atoms (i, k) selected by means of the magnetic field strength to switch the selected atoms from the passive state to the active state. Then a CNOT sequence is applied in accordance with equation (7) below for the two neighboring electron spins $S_i$ and $S_k$. Afterwards, the selected atoms i, k are switched back to the passive state by means of another SWAP sequence. Thus, the CNOT gate in accordance with equation (10) below is performed, wherein the dipole-dipole interaction between two neighboring atoms is switched on for a predetermined period of time.

While the above description has been given with respect to a system where the passive states correspond to nuclear spin states whereas the active states correspond to electron spin states, the present invention is by no means limited to such a specific system. As will become apparent to the person skilled in this field also other degrees of freedom may be used instead for selecting the passive and active states. For performing the method according to the present invention the interaction between active states of neighboring quantum computation atoms should be significantly stronger than the interaction between passive states of neighboring quantum computation atoms. Further, it must be possible to apply selective pulse sequences for transfering qubit information between the active and passive states.

It is known from the prior art that vibrational or rotational modes corresponding to vibrational or rotational degrees of freedom of a molecule strongly interact with the environment. Further, it is known from the prior art that by applying laser pulses in the infrared wavelength region such vibrational or rotational modes may be excited in a controllable manner. It is therefore envisaged that the present invention may be carried out also in systems were the active state is a vibrational or rotational eigenstate and where the passive state may be excited and manipulated e.g. optically for encoding qubit-information in electronic states of a quantum computation atom of a molecule.

For controlling the currents in the wires and for controlling the circuitry 4, a computer program product may be used comprising program code means for performing the quantum computation method according to any of the method claims, if said program is run on a processing means included in a system according to any of the system claims for controlling at least said oscillating electromagnetic field generating means in accordance with quantum computations to be performed.

## II. Theoretical Principles of the Quantum Computation Method

In the following the theoretical principles involved in the quantum computation method according to the present invention will be explained in detail. The references included in the [ ] brackets are indicated in the appendix of this specification for information disclosure purposes. For the purpose of this application the disclosure of all of the references indicated in the appendix are hereby incorporated by reference.

In the following, we propose a scalable design for a solid-state spin-based quantum computer. It uses endohedral fullerenes like N@C60 or P@C60, which can be positioned on Si surfaces with a scanning tunnelling microscope. The quantum information can be stored in both the nuclear and electronic spin. We discuss the addressing of individual qubits by a magnetic field gradient, and the implementation of one- and two-qubit quantum gates by sequences of radio-frequency and microwave pulses.

### I. INTRODUCTION

Computers based on quantum mechanical systems [1] may be able to successfully tackle numerical problems that are exponentially difficult on classical computers [2]. While spin 1/2 particles form an obvious basis for implementing a qubit, it was not until 1997 when it was shown that nuclear magnetic resonance (NMR) can actually implement a quantum computer in an ensemble of molecules [3, 4]. These results and the subsequent work on NMR quantum computing in liquids opened the first possibility to study quantum algorithms in an actual experiment. It appears unlikely, however, that such a scheme will be scalable to the number of qubits required for increasing the speed of a quantum computer over that of a classical computer [5]. It is therefore generally believed that scalable spin-based quantum computers will have to rely on solid-state systems [6-8, 29]. In particular Kane's proposal [6], which uses single donor spins in Si appears very attractive if the engineering problems can be overcome. For current technology, the placement of the impurity spins inside the silicon crystal is probably the most demanding part of the scheme.

This difficulty is avoided in the approach suggested by Harneit et al [10-12], where the qubits are placed on the surface rather than inside the crystal. These authors show that the long decoherence time of the electronic spin in $N@C_{60}$ makes it an ideal candidate for the implementation of a qubit. The $C_{60}$ cage represents a nanometer-sized trap for the nitrogen atom, which can be precisely positioned on a Si surface using state of the art STM techniques [13, 14]. The nitrogen and phosphorus atoms inside these cages are virtually free atoms, with very long relaxation times [15]. The electronic spin is S=3/2, and the nuclear spin either I=1/2 ($^{31}$P, $^{15}$N), or I=1 ($^{14}$N).

While $N@C_{60}$ appears as a very promising candidate for storing quantum information, Ref. [10] contains only vague suggestions for addressing individual qubits by shifting electron density onto the cages. No experimental evidence exists to date that indicates whether interactions due to electrostatic gates can be used for quantum computation.

It is therefore the purpose of this paper to introduce an alternative architecture that uses only the Zeeman and dipole-dipole interactions, both of which are well characterized. Addressing can be performed with magnetic field gradients generated by micro patterned wires. In this respect this concept resembles a proposal by Goldman et al [16], who proposed to use static field gradients for addressing qubits through their Larmor frequencies. Since we use electronic spins here, rather than nuclear spins, the frequency difference between adjacent qubits is some three orders of magnitude larger, with correspondingly faster switching times.

### II. QUBIT IMPLEMENTATION

The degrees of freedom relevant for us are the electronic spin, which is for the ground state nitrogen atom S = 3/2, and the nuclear spin I = ½ for $^{15}$N and $^{31}$P or I = 1 for $^{14}$N. For the present purpose, the size of the spin is not relevant, so we simplify the discussion by considering a chain of S = ½ electronic spins, each coupled to a single I = ½ nuclear spin.

Each logical qubit in our system is represented by a spin pair consisting of an electron and a nuclear spin. The relevant spin Hamiltonian for a single logical qubit is then (setting $\hbar$=1)

$$H_S = 2\mu_B B_O S - g_N \mu_N B_O I + A S \cdot I \tag{1}$$

where the first two terms axe the electron and nuclear Zeeman Hamiltonians and the last term is the hyperfine interaction Hamiltonian. $\mu_B$ is the Bohr magneton, g the g-factor, $\gamma_n$ the gyromagnetic ratio of the nucleus. S and I are the electron and nuclear spin operators.

Equation (1) can be simplified if the electron Zeeman interaction is significantly stronger than the other interactions. In an external field of $B_0 = 1$ T, the resonance frequency of the electronic spin is $\nu_e = 28$ GHz and the nuclear Larmor frequency is $\nu_n = 4.3$ MHz for $^{15}$N, while the isotropic hyperfine interaction is 22.35 MHz for $^{15}$N [17]. We may disregard those terms in the Hamiltonian, which do not commute with the electron Zeeman interaction. With the conventional choice of the axis system, the Hamiltonian simplifies to

$$H_S = g\mu_B B_0 S_z - \gamma_n B_0 I_z + A I_z S_z \tag{2}$$

Logical gates can be applied to these qubits by microwave pulses that rotate the spin through a specific angle around an axis determined by the frequency and phase of the microwave. To address a specific qubit, we need a way to distinguish between them. Rather than relying on electrodes that access individual molecules, we propose magnetic field gradients, which can shift the resonance frequency of neighbouring electron spins by several MHz. Using integrated circuits, it is possible to apply currents of 1 A through a 1 $\mu$ diameter wire [18]. Two parallel wires with radius r and separated by a distance $\Delta$ generate a magnetic field in the space between the wires of

$$B_G = \frac{\mu_0}{4\pi} 2I \left( \frac{1}{x + \frac{\Delta}{2} + \tau} - \frac{1}{x - \frac{\Delta}{2} - \tau} \right). \tag{3}$$

where I is the current in the wires and x the position, measured from the center between the wires. Fig. 2 shows a schematic representation of the arrangement.

At a minimum separation of 1.14 nm, the field would therefore increase by at least 0.45 mT between nearest neighbours, corresponding to a frequency difference of more than 12.5 MHz. Increasing the separation between molecules, which is possible in increments of 0.38 nm for $C_{60}$ on Si(100), increases the frequency separation roughly linearly with the distance.

The logical qubits that we consider here allow us to store the information in the nuclear or in the electron spin. Generally the nuclear spins have longer decoherence times, while the electronic spins interact more strongly with the applied magnetic fields, thus providing shorter gate times. As we show below, using both degrees of freedom allows one to effectively switch the interaction between neighbouring qubits on and off. Furthermore, it allows one to optimize the number of gate operations before decoherence becomes relevant by storing information in the nuclear spins while no gate operation is applied and performing operations on the strongly interacting electron spins.

Accordingly, we distinguish a passive state of the logical qubit, during which the information is stored in the nuclear spin, and an active state, where the information is stored in the electron spin. Conversion between the two states can be achieved with the SWAP operation. This operation has already been implemented in liquid-state NMR [20, 21], using pulse sequences of the type

$$SWAP = [I_x + S_z][2I_z S_z][-I_y - S_y][2I_z S_z][I_X + S_X][2I_z S_z][I_y + S_y] \tag{4}$$

Here we use the notation

$$e^{i \frac{\pi}{2} Ir} = [I_r]$$

, with r representing x, y or z.

This implementation requires ideal (= "hard") radio frequency and microwave pulses. In the system we are considering here, it would be experimentally very hard to implement such hard radio frequency pulses to the nuclear spins, whose transition frequencies are split by the 15 MHz hyperfine interactions. A better approach would be to use two-frequency pulses at the two satellite transitions, which can be implemented in any double resonance NMR spectrometer. The electron spin system can also be manipulated with selective pulses, which act on only one of the two-hyperfine-split transitions. Using such selective pulses, the SWAP operation can be implemented (up to an overall phase) by sequences of three $\pi$ pulses applied to adjacent transitions, e.g.

$$\begin{aligned} SWAP &= [2S_y^{(12)}][2I_x^{(13)}][-2S_y^{(12)}][-0.5F_z] \\ &= [2I_y^{(13)}][2S_x^{(12)}][-2I_y^{(13)}][-0.5F_z] \end{aligned} \qquad (5)$$

The upper index refers to a single transition of the respective spin [22]. A term $[2S_\chi^{(12)}]$ thus represents a rotation by $\pi$ around the x-axis of transition $|1\rangle \leftrightarrow |2\rangle$. The operator $F_z = I_z + S_z$ corresponds to a rotation of both spins around the z-axis, which can be implemented either by composite z pulses or as a phase shift during the overall pulse sequence.

### III. ONE-QUBIT GATES

Universal quantum computation requires arbitrary rotations of single qubits. As is well known, these rotations can be implemented for spins with radio frequency pulses. Addressing individual qubits can in our case be implemented by the magnetic field gradient and frequency-selective pulses. For the geometry described above, the electronic and the nuclear spins are both shifted by the magnetic field gradient. For the numbers considered above, the separation between the nuclear Larmor frequencies of adjacent molecules is a few kHz. The duration of selective radio frequency pulses would therefore be of the order of 1 ms.

Considerable faster gates operations are possible if the frequency separation of neighbouring electron spins is used. Since the frequency separation is more than 10 MHz, selective gate operations can be shorter than 1 μs.

As we discussed above, the quantum information is usually stored in the nuclear spin. Applying a one-qubit gate to a specific qubit involves therefore three steps: first, the information is activated by SWAPping from the nuclear to the electron spin. There, the selective rotation is applied and a second SWAP operation brings the information back into the nuclear spin.

As a specific example, we consider the pseudo-Hadamard operation $h_i$ [30], (a $\pi/2_y$ rotation) applied to logical qubit i. It can be implemented as

$$h_i = [I_y^{(i)}] = SWAP_i [S_y^{(i)}] SWAP_i. \qquad (6)$$

To keep pulse sequences short, the radio frequency pulses should not be selective with respect to the nuclear spins. Accordingly, all nuclear spins will be affected by this pulse sequence, not only the nuclei of the target qubit. However, for the passive qubits, the electronic spin is not affected. As a result, they only experience two SWAP operations, which, in the ideal case, leave the qubits unaffected.

### IV. 2-QUBIT GATES

Universal quantum computation requires, in addition to the single qubit gates, a two-qubit gate such as an XOR- or CNOT gate that can be applied to any two nearest neighbours. In magnetic resonance, a CNOT gate to spins A, B can be implemented by the pulse sequence [23]

$$CNOT_{AB} = [-B_y][-A_z - B_z][2A_zB_z][B_y] \tag{7}$$

The notation for the evolution is the same as above. The terms $[2A_zB_z]$ represent free precession under the coupling Hamiltonian, while the term $[B_y]$ represents a $\frac{\pi}{2}$ rotation of spin B around the y-axis.

Like in this example, two-qubit gates always use a precession under a coupling Hamiltonian for a duration $\tau$. To implement such an operation, the coupling has to be turned on for the appropriate duration. While dipolar couplings between nearest neighbour $N@C_{60}$ molecules are of a suitable size, they can only be turned off by moving the molecules apart, which is difficult to achieve within the time windows available.

Kane's proposal [6] for a scalable spin-based quantum computer uses "J-gates", which shift electrons that mediate an exchange interaction between the nuclear spin qubits. In the case of endohedral fullerenes, this scheme appears not to be feasible, since the exchange of electrons between the central N-atom and the cage is very weak. We therefore suggest an alternative possibility, again SWAPping the quantum information between the nuclear and the electronic spin. When the information is stored in the electron spin, the interaction between neighbouring qubits molecules tends to entangle the qubits. When the information is swapped into the nuclear spins, the interaction is effectively switched off, since the nuclear dipole-dipole interaction is more than six orders of magnitude smaller than that between two electron spins (of the order of a few Hertz at a separation of 1 nm). On the timescales relevant to us, it can be safely neglected.

For a formal analysis of this scheme, we start with the spin Hamiltonian for two logical qubits

$$\mathbf{H}_{ik} = \omega_i S_z^i + \omega_k S_z^k + \omega_n(I_z^i + I_z^k) + A(S_z^i I_z^i + S_z^k I_z^k) + dS_z^i S_z^k \tag{8}$$

where $\omega_i = g_B\mu_B(B_0 + B_G(r_i))$ represents the Larmor frequencies of the electron spin i and $\omega_n$ the nuclear Larmor frequency. For the nuclear spins, we neglect the difference in the Larmor frequency, and we assume that the difference between the Zeeman frequencies of neighbouring electron spins is large compared to the dipolar interaction, thus allowing us to truncate the dipolar interaction. This condition can always be fulfilled by increasing the distance between the molecules, which is possible in increments of 0.38 nm for $C_{60}$ on Si(100). At the smallest possible distance of 1.1 nm, the dipolar interaction would be as large as 50 MHz, thus exceeding the difference of the Larmor frequencies. Increasing the separation $\delta$ would decrease the dipolar interaction ($\alpha\ \delta^{-3}$) while increasing the difference of the Larmor frequencies ($\alpha\ \delta$).

Using the single qubit addressing scheme discussed above, SWAP operations can be applied to the spin pairs within a specific logical qubits. We will write $SWAP_i$ for a SWAP operation applied to logical qubit i. Possible pulse sequences were given above. The effect of a SWAP operation can be summarized as

$$SWAP_i\, I_\alpha^k\, SWAP_i = S_\alpha^k\delta_{ik} + I_\alpha^k(1 - \delta_{ik})$$

$$SWAP_i\, S_\alpha^k\, SWAP_i = I_\alpha^k\delta_{ik} + S_\alpha^k(1 - \delta_{ik})$$

$$SWAP_i\, SWAP_i = 1 \tag{9}$$

To implement a 2-qubit operation, such as a CNOT between the neighbouring logical qubits i and k, we assume that the quantum information is normally stored in the nuclear spin. The operation can then be implemented by SWAPping the information in both relevant qubits into the electron spin, applying the CNOT operation to the two electron spins, and SWAPping the information back to the nuclear spin. The sequence of operations is then

$$CNOT_{ik} = CNOT_{I_iI_k} = SWAP_i\, SWAP_k\, CNOT_{S_kS_k}\, SWAP_k\, SWAP_i \tag{10}$$

After the operation, the information is again in the nuclear spin and remains unaffected by the coupling between the electron spins. The double SWAP operation has therefore the effect of switching the dipole interaction on for a limited time.

In the Hamiltonian of equation (8), we did not take into account the couplings to the passive qubits, which are also present, but should not affect the evolution of the qubits i and k. Since we assume only nearest-neighbour interactions in this context, this can be achieved by selective irradiation of the neighbouring electron spins.

## V. DISCUSSION AND CONCLUSION

We have presented an architecture for a scalable quantum computer. While it is motivated b a specific type of molecules (endohedral fullerenes), it only uses the fact that nuclear and electronic spins have vastly different gyromagnetic ratios. Swapping the information between the nucleus and the electron allows one to effectively switch the dipole-dipole interaction on for a well defined period. As a consequence, we only need one type of addressing capability for the individual spins is required, which corresponds to the A-gates in Kane's design.

A major difficulty in any spin-based quantum computer is the readout problem. While single-spin magnetic resonance by optical detection has been demonstrated in several systems [24, 25], these experiments are only possible in a relatively narrow parameter range, which does not include N@C60. Another technique, that may allow single spin detection, is magnetic force detection [7, 26, 27]. This approach has the advantage that it requires less specific parameters, but present implementations are still far from single spin sensitivity. Single-spin detection has also been reported with an STM [28], but the experiment is not well understood so far and no other group has reproduced the results. Another possible approach could combine spin-dependent tunnelling with single-electron detection [29].

The SWAP operation, which was used in this architecture, may also be useful for the readout problem. It may be possible, e.g., to swap the information from the qubits where they are processed to a readout-qubit, such as a single electron device. Such elements tend to have shorter decoherence times, making them less suitable for the processor part of the quantum computer, but the stronger coupling to the environment facilitates the readout, where the decoherence will be less critical.

Another problem, which is shared by most spin-based architectures, is the initialization: quantum error correction requires a supply of qubits in a well defined state, such as the ground state. While thermal relaxation may bring most spins into their ground state if the field is sufficiently high and the temperature low, this process cannot be faster than he decoherence for the same spin, and is therefore not useful for quantum error correction. Again, the SWAP operation may be used for this purpose: Spins in an environment of lower symmetry that N@C60 tend to have significantly shorter relaxation times. Such could therefore provide qubits in the |0 > state at a high rate, and a SWAP operation could transfer this state to the qubits of the quantum register.

What follows, is an appendix of references cited above in the [ ] brackets.

## APPENDIX     REFERENCES

[1] R. P. Feynman, "Simulating Physics With Computers," Int. J. Theor. Phys. **21**, 467 (1982).

[2] P. W. Shor, "Polynomial time algorithms for prime factorization and discrete logarithms on a quantum computer," SIAM J. Sci. Statist. Comput. **26**, 1484 (1997) [arXiv:quant-ph/9508027].

[3] N. A. Gershenfeld and I. L. Chuang, "Bulk spin-resonance quantum computation". Science **275**, 350 (1997).

[4] D. G. Cory, A. F Fahmy, and T. F. Havel, "Ensemble quantum computing by NMR spectroscopy", Proc. Natl. Acad. Sci. USA **94** ,1634 (1997).

[5] W. S. Warren, "The usefulness of NMR quantum computing", Science 277, 1688 (1997).

[6] B. E. Kane, " Silicon-based quantum computation", Fortschr. Phys. **48** ,1023 (2000).

[7] G. P. Berman, G. D. Doolen, P. C. Hammel, and V. I. Tsifrinovich, "Magnetic Resonance Force Microscopy Quantum Computer with Tellurium Donors in Silicon", Phys. Rev. Lett. **86**, 2894 (2001).

[8] A. Imamoglu, D. D. Awschalom, G. Burkard, D. P. DiVincenzo, D. Loss, M. Sherwin, and A. Small, "Quantum Information Processing Using Quantum Dot Spins and Cavity QED", Phys. Rev. Lett. **83**, 4204 (1999).

[9] H. A. Engel, P. Recher, and D. Loss, "Electron spins in quantum dots for spintronics and quantum computation", Solid State Comm. **119**, 229 (2001).

[10] W. Harneit, M. Waiblinger, K. Lips, S. Makarov, and A. Weidinger, AIP Conf. Proc. 544, 207 (2000).

[11] W. Harneit, M. Waiblinger, K. Lips, C. Meyer, A. Weidinger, and J. Twamley, "Electron

of Quantum Computation", edited by R. Clark (Rinton Press, Princeton, NJ), in print (2001).

[12] W. Harneit, submitted to Phys. Rev. A.

[13] P. Moriarty, Y. R. Ma, M. D. Upward, and P. H. Beton, "Translation, rotation and removal of C60 on Si(100)-2x1 using anisotropic molecular manipulation", Surface Science **407**, 27 (1998).

[14] M. J. Butcher, F. H. Jones, P. Moriarty, P. H. Beton, K. Prassides, K. Kordatos, and N. Tagmatarchis, "Room temperature manipulation of the heterofullerene C59 N on Si - 100 - -231", Appl. Phys. Lett. **75**, 1074 (1999).

[15] C. Knapp, K. P. Dinse, B. Pietzak, M. Waiblinger, and A. Weidinger, "Fourier transform EPR study of N@C60 in solution", Chem. Phys. Lett. **272**, 433 (1997).

[16] J. R. Goldman, T. D. Ladd, F. Yamaguchi, and Y. Yamamoto, "Magnet designs for a crystal-lattice quantum computer", Appl. Phys. A **71** /(DOI) 10.1007/s003390000481, 11-17 (2000).

[17] A. Weidinger, M. Waiblinger, B. Pietzak, and T. Almeida Murphy, "Atomic nitrogen in C60:N@C60" , Appl. Phys. A **66**, 287 (1998).

[18] J. Schmiedmayer (personal communication).

[19] M. Waiblinger, B. Goedde, K. Lips, W. Harneit, A. Weidinger, and KP. Dinse, "Magnetic interaction in diluted N@C60" , *Molecular Nanostructures* (World Scientific, Singapore, 2000).

[20] N. Linden, B. Herve, RJ. Carbajo, R. Freeman, "Pulse sequences for NMR quantum computers: how to manipulate nuclear spins whille freezing the motion of coupled neighbours" , Chem. Phys. Lett. **305**, 28 (1999).

Quantum Computing Logical Gates and NMR Pulse Sequence Engineering Exemplified by the SWAP Operation", Conc. Magn. Reson. **12**, 389 (2000).

[22] A. Wokaun ,and R. R. Ernst, "Selective excitation and detection in multilevel spin systems: application of single transition operators", J. Chem. Phys. **67**, 1752 (1977).

[23] M. D. Price, S. S. Somaroo, C. H. Tseng, J. C. Gore, A. F. Fahmy, T. F. Havel, and D. G. Cory," Construction and implementation of NMR quantum logic gates for two spin systems", J. Mag. Res. **140: (2)**, 371 (1999).

[24] J. Köhler, J. A. J. M. Disselhorst, M. C. J. M. Donckers, E. J. J. Groenen, J. Schmidt, and W. E. Moerner, "Magnetic resonance detection of a single molecular spin", Nature **363**, 242 (1993).

[25] J. Wrachtrup, C.v. Borczyskowski, J. Bernard, M. Orrit, and R. Brown, "Optical detection of magnetic resonance in a single molecule", Nature **363**, 244 (1993).

[26] D. Rugar, C. S. Yannoni, and J. A. Sidles, "Mechanical detection of magnetic resonance", Nature **360**, 563 (1992).

[27] G. P. Berman, G. D. Doolen, P. C. Hammel, and V. I. Tsifrinovich, "Solid-state nuclear-spin quantum computer based on magnetic resonance force microscopy", Phys. Rev. B **61: (21)**, 14694 (2000).

[28] Y. Manassen, I. Mukhopadhyay, and N. R. Rao, "Electron-spin-resonance STM on iron atoms in silicon", Phys. Rev. B **61**, 16223 (2000).

[29] H.-A. Engel and D. Loss, "Detection of Single Spin Decoherence in a Quantum Dot via Charge Currents", Phys. Rev. Lett. **86**, 4648 (2001).

[30] J.A. Jones and M. Mosca, "Approximate Quantum Counting on an NMR Ensemble Quantum Computer", Phys. Rev. Lett. **83**, 1050-1053 (1999).

**Claims**

1. A method for quantum computation in a system comprising a plurality of quantum computation atoms (12), an energy level changing means (11) for subjecting said atoms to an interaction spatially varying in at least one direction (y) and changing energy levels of said atoms, an oscillating electromagnetic field generating means (2, 3) for applying selective pulses of an oscillating electromagnetic field to said atoms and a circuitry for detecting a response signal from said atoms, the method comprising:

> providing said plurality of atoms at fixed predetermined locations relative to said energy level changing means (11) for selecting quantum computation atoms in accordance with said interaction;
> controlling said oscillating electromagnetic field generating means (2, 3) as to apply a sequence of selective pulses to selected atoms representing a qubit gate; and
> detecting a response signal from said atoms in response to the qubit gate applied;

wherein the step of controlling said oscillating electromagnetic field generating means comprises:

> generating at least one selective pulse for transferring logical qubit information of a selected atom between a passive state, where the qubit information is encoded in a state weakly interacting with the environment, and an active state, where the logical qubit information is encoded in a state strongly interacting with the environment, wherein said qubit gate is applied to a selected atom in an active state.

2. The method according to claim 1, wherein energy levels of said quantum computation atoms are given by a Hamiltonian comprising two interaction terms with associated sets of first and second eigenstates and an interaction coupling said first with said second eigenstates, further comprising an operation comprising the step of:

> controlling said oscillating electromagnetic field generating means (2, 3) as to generate a first sequence of selective pulses ($SWAP_i$) for manipulating the first and second eigenstates of a selected atom (i) associated to a logical qubit, wherein
> a frequency of at least one pulse of said first sequence is selected in accordance with an energy level difference between two first eigenstates of said selected atom and
> a frequency of at least a second pulse of said first sequence is selected in accordance with an energy level difference between two second eigenstates of said selected atom,
> for transferring logical qubit information of said selected atom between the passive state and the active state.

3. The method according to claim 2, further comprising a step of applying a one-qubit gate to a selected atom, comprising the steps of:

> applying said first sequence of selective pulses for transferring logical qubit information of said selected atom from a passive state to an active state;
> applying at least one selective pulse of a frequency in accordance with an energy level difference between two second eigenstates of said selected atom; and
> applying said first sequence of selective pulses for transferring logical qubit information of said selected atom from an active state back to a passive state.

4. The method according to claim 2 or 3, further comprising a step of coupling two selected neighboring atoms (i, k) for a predetermined period of time ($\tau$) while being in an active state, comprising:

> controlling said oscillating electromagnetic field generating means (2, 3) as to generate a second sequence of selective pulses ($CNOT_{Si\,Sk}$) for manipulating the second eigenstates ($S_i$, $S_k$) of said neighboring atoms (i, k),
> a frequency of at least one pulse of said second sequence being selected in accordance with an energy level difference between two second eigenstates of a first selected atom (i) of said neighboring atoms and
> a frequency of at least another pulse of said second sequence being selected in accordance with an energy level difference between two second eigenstates of the second selected atom (k) of said neighboring atoms.

5. The method according to claim 4, further comprising a step of applying a two-qubit gate (CNOT) to qubits associated to neighboring selected atoms (i, k), comprising the steps of:

> transferring logical qubit information of said neighboring atoms from a passive state to an active state by applying two of said first sequences of selective pulses ($SWAP_k$, $SWAP_i$) to said neighboring atoms;
> coupling, by applying said second sequence of selective pulses ($CNOT_{Si\,Sk}$), the second eigenstates of said neighboring atoms (i, k) for a predetermined perio of time ($\tau$); and
> transferring logical qubit information of said neighboring atoms from an active state to a passive state by applying said two first sequences of selective pulses to said neighboring atoms.

**6.** The method according to any of claims 2 to 5, wherein the step of providing said plurality of atoms comprises
providing said atoms of non-vanishing electron and nuclear spin, wherein said first eigenstates are nuclear spin states and second eigenstates are electron spin states and said interaction couples the electron and nuclear spin of a quantum computation atom.

**7.** The method according to the preceding claim, wherein the step of providing atoms of non-vanishing electron and nuclear spin further comprises the steps of:

providing said atoms in the center of fullerene molecules; scanning a positioning means (STM) bearing at least one fullerene molecule ($C_{60}$) over a solid state surface for positioning said fullerene molecules ($C_{60}$) at predetermined locations on said surface, preferably at a regular pattern (13), to thereby create an arrangement comprising a plurality of neighboring quantum computation atoms for performing said quantum computation.

**8.** The method according to any of the preceding claims, wherein
said energy level changing means is a magnetic field generating means comprising at least one pair of conductive paths (11), the conductive paths of each pair extending substantially linearly and in parallel with and at a predetermined distance to each other;
further comprising the step of
controlling said magnetic field generating means (2, 3) as to provide, for each pair of conductive paths, two currents of predetermined magnitude flowing into opposite directions of a respective pair of conductive paths (11) thereby generating a predetermined magnetic field gradient for selecting quantum computation atoms.

**9.** A system for quantum computation, comprising:

a magnetic field generating means (11) for generating a magnetic field of predetermined magnitude and spatially varying in at least one direction (y);
a plurality of quantum computation atoms (12) of non-vanishing electron and nuclear spin disposed at fixed predetermined locations relative to said magnetic field generating means (11) so as to split electron and nuclear spin energy levels of said atoms depending on a magnitude of said magnetic field at the location of a respective atom;
oscillating electromagnetic field generating means (2, 3) for applying a sequence of selective pulses of an oscillating electromagnetic field to said quantum computation atoms, said sequence representing a qubit gate;
a circuitry (2, 3; STM; 4) for detecting a response signal from said atoms in response to the qubit gate applied; and
controlling means (4) for controlling said oscillating electromagnetic field generating means as to generate selective pulses of predetermined duration and frequency for manipulating electron and nuclear spin states of said quantum computation atoms,

wherein at least one selective pulse is generated for transferring logical qubit information of a selected atom between a passive state, where the qubit information is encoded in a state weakly interacting with the environment, and an active state, where the logical qubit information is encoded in a state strongly interacting with the environment, wherein said qubit gate is applied to a selected atom in an active state.

**10.** The system according to the previous claim, wherein
said atoms are respectively disposed in the center of a fullerene molecule (12), said fullerene molecules being positioned on a solid state surface, preferably at a regular pattern (13), and
said magnetic field generating means comprises at least one pair of conductive paths (11), the conductive paths of a respective pair extending substantially linearly and in parallel with and at a predetermined distance ($\Delta$) to each other, said system further comprising
controlling means for controlling said magnetic field generating means (11) as to provide, for each pair of conductive paths, two currents of predetermined magnitude flowing into opposite directions of a respective pair of conductive paths (11) thereby generating a predetermined magnetic field gradient for selecting quantum computation atoms.

FIG. 1

Figure 2

Fig. 3

**European Patent Office**

## EUROPEAN SEARCH REPORT

Application Number

EP 01 12 6515

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 30255 A (UNIV LELAND STANFORD JUNIOR) 25 May 2000 (2000-05-25) | 1,8-10 | G06N1/00 |
| Y | * page 1, line 19 - page 18, line 12; figures 1-6 * | 2-7 | |
| Y | US 6 218 832 B1 (CHUANG ISAAC LIU ET AL) 17 April 2001 (2001-04-17) * the whole document * | 2-6 | |
| Y | EP 0 591 595 A (IBM) 13 April 1994 (1994-04-13) * column 2, line 45 - column 6, line 34 * | 7 | |
| A | CHUANG I L ET AL: "Bulk quantum computation with nuclear magnetic resonance: theory and experiment" ROYAL SOCIETY OF LONDON. PROCEEDINGS. SERIES A. MATHEMATICAL, PHYSICAL AND ENGINEERING SCIENCES, XX, XX, vol. 454, no. 1969, 8 January 1998 (1998-01-08), pages 447-467, XP002105405 ISSN: 1346-5021 * page 458, line 8 - page 459, line 11; figure 4 * | 1-10 | |
| | -/-- | | TECHNICAL FIELDS SEARCHED (Int.Cl.7) G06N |

The present search report has been drawn up for all claims

| Place of search | Date of completion of the search | Examiner |
|---|---|---|
| THE HAGUE | 17 April 2002 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 12 6515

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | HARNEIT W ET AL: "N@C/sub 60/ for quantum computing" ELECTRONIC PROPERTIES OF NOVEL MATERIALS - MOLECULAR NANOSTRUCTURES. 14TH INTERNATIONAL WINTERSCHOOL/EUROCONFERENCE, KIRCHBERG, AUSTRIA, 4-11 MARCH 2000, 'Online! no. 544, pages 207-210, XP002196473 AIP Conference Proceedings, 2000, AIP, USA ISSN: 0094-243X Retrieved from the Internet: <URL:http://planck.thphys.may.ie/QIPDDF/Overview/papers/Harneit2000.pdf> 'retrieved on 2002-04-17! * the whole document * | 7 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 17 April 2002 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 01 12 6515

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2002

| Patent document cited in search report | | Publication date | Patent family member(s) | | Publication date |
|---|---|---|---|---|---|
| WO 0030255 | A | 25-05-2000 | WO | 0030255 A2 | 25-05-2000 |
| US 6218832 | B1 | 17-04-2001 | NONE | | |
| EP 0591595 | A | 13-04-1994 | EP | 0591595 A1 | 13-04-1994 |
| | | | US | 5547774 A | 20-08-1996 |